## Europäisches Patentamt
## European Patent Office
## Office européen des brevets

(19)

(11) Numéro de publication: **0 015 795**
**B1**

(12)

# FASCICULE DE BREVET EUROPEEN

(45) Date de publication du fascicule du brevet: **18.05.83**

(51) Int. Cl.³: **A 01 B 59/043,**
**A 01 B 63/10**

(21) Numéro de dépôt: **80400199.8**

(22) Date de dépôt: **08.02.80**

(54) Attelage trois points utilisable aussi bien à l'avant qu'à l'arrière de tous engins ou véhicules.

(30) Priorité: **16.02.79 FR 7904034**

(43) Date de publication de la demande:
**17.09.80 Bulletin 80/19**

(45) Mention de la délivrance du brevet:
**18.05.83 Bulletin 83/20**

(84) Etats contractants désignés:
**AT DE GB NL SE**

(56) Documents cités:
**DE - A - 2 717 855**
**DE - C - 935 512**
**FR - A - 1 095 456**
**FR - A - 2 305 926**
**GB - A - 1 500 179**
**US - A - 2 755 776**
**US - A - 3 031 208**
**US - A - 3 078 930**

(73) Titulaire: **ATTELAGES LEMOINE- LA MECANO-
SOUDURE REMOISE**
**1 rue du Commandant Barbier Zone Industrielle
Ouest**
**F-51057 Reims Cedex (FR)**

(72) Inventeur: **Mijot, Guy**
**3 G rue des 16e et 22e Dragons**
**F-51100 Reims (FR)**
Inventeur: **Derycke, Léon**
**2 Galerie des Baléares**
**F-51100 Reims (FR)**
Inventeur: **Dienne, Didier**
**13 rue Jean-François Millet**
**F-02190 Guignicourt (FR)**
Inventeur: **Martinot, Roger**
**79 rue Jobert Lucas**
**F-51100 Reims (FR)**

(74) Mandataire: **Guyard, Alain**
**Cabinet Technique CH. ASSI & L. GENES 41 rue
des Martyrs**
**F-75009 Paris (FR)**

Courier Press, Leamington Spa, England.

Attelage trois points utilisable aussi bien à l'avant qu'à l'arrière de tous engins ou véhicules

Par le brevet des Etats-Unis n° 3 078 930, on connaît un attelage "trois points" monté de façon amovible sur un organe de support comprenant deux rebords verticaux et deux rebords horizontaux et fixé à l'arrière d'un véhicule classique dans lequel un espace pouvant recevoir une charge est ménagé derrière le siège du conducteur. Une plaque verticale faisant partie de l'organe de support précité est traversée par une prise de force. A l'organe de support précité est fixé un arbre transversal aux extrémités duquel sont pivotés deux bras de levage (ou barres de traction) qui peuvent également être reliés à l'arbre transversal par des barres rigides à longueur réglable. Un vérin unique porté par le véhicule et relié à une source de liquide permet de faire pivoter les deux barres de traction. Une barre médiane à longueur variable est montée pivotante sur une chape fixée au sommet de l'organe de support précité, à mi-distance entre les bras de levage (ou barres de traction), et constitue le troisième élément de l'attelage, et son extrémité libre peut être fixée à une barre associée à un outil quelconque, par exemple une charrue ou une tarière. Des dispositifs à vis de longueur réglable présentent chacun une extrémité fixée au voisinage de l'extrémité libre de chacune des barres de traction précitées.

On connaît également des attelages "universels" pour des tracteurs de type quelconque permettant une fixation en un, deux ou trois points d'un accessoire par exemple agricole, et dans lesquels chacune des barres de traction est formée soit d'une pièce unique, soit de deux éléments articulés l'un à l'autre de façon à fonctionner simultanément, et chacune de ces barres de traction est actionnée par un cylindre monté pivotant par rapport au véhicule.

Ces dispositifs connus présentent certains inconvénients d'order pratique, et en conséquence il a paru nécessaire de les améliorer en réalisant un attelage "trois points" utilisable aussi bien à l'avant qu'à l'arrière d'un véhicule industriel, agricole, pour travaux publics ou forestier, par exemple d'un tracteur.

L'invention consiste en un attelage conforme aux caractéristiques revendiquées, et pour l'essentiel à l'ensemble des caractéristiques de la revendication 1.

On comprendra mieux l'invention à la lecture de la description qui va suivre, faite avec référence aux dessins annexés, d'un mode de réalisation et de variantes de détails. Sur ces dessins:

La figure 1 est une élévation latérale d'une attelage "trois points" connu, et montre en traits pleins les barres de traction en position basse et en tirets ces barres en position haute.

La figure 2 est une perspective d'un attelage suivant l'invention.

La figure 3 est une perspective éclatée montrant la fixation au palonnier de l'attelage du dispositif à vis de transmission à une barre de traction du mouvement de son vérin d'actionnement.

La figure 4 est une perspective analogue à la figure 2 et montrant une variante des barres de traction.

La figure 5 est une perspective éclatée, analogue à la figure 3, montrant la fixation au palonnier du dispisitif à vis de la figure 4.

La figure 6 est une perspective montant la fixation à la partie amovible d'une barre de traction de la figure 4 de deux dispositifs à vis dont l'autre extrémité est fixée au palonnier.

La figure 7 est un plan de l'ensemble des vérins et d'un bloc obturateur utilisable comme limiteur de descente dans le cas de vérins fonctionnant à simple ou double effet.

La figure 8 est un plan analogue mais avec deux blocs obturateurs identiques utilisables comme limiteurs de descente et de montée dans le cas de vérins fonctionnant à double effet.

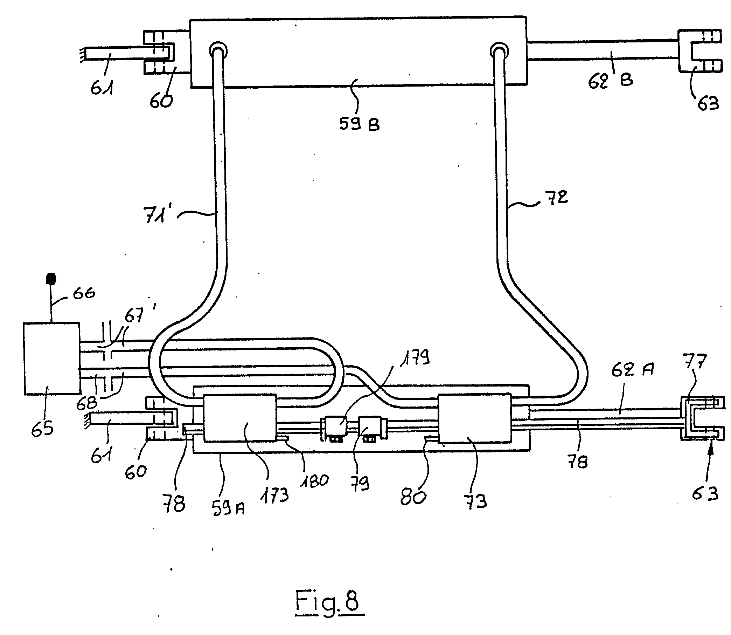

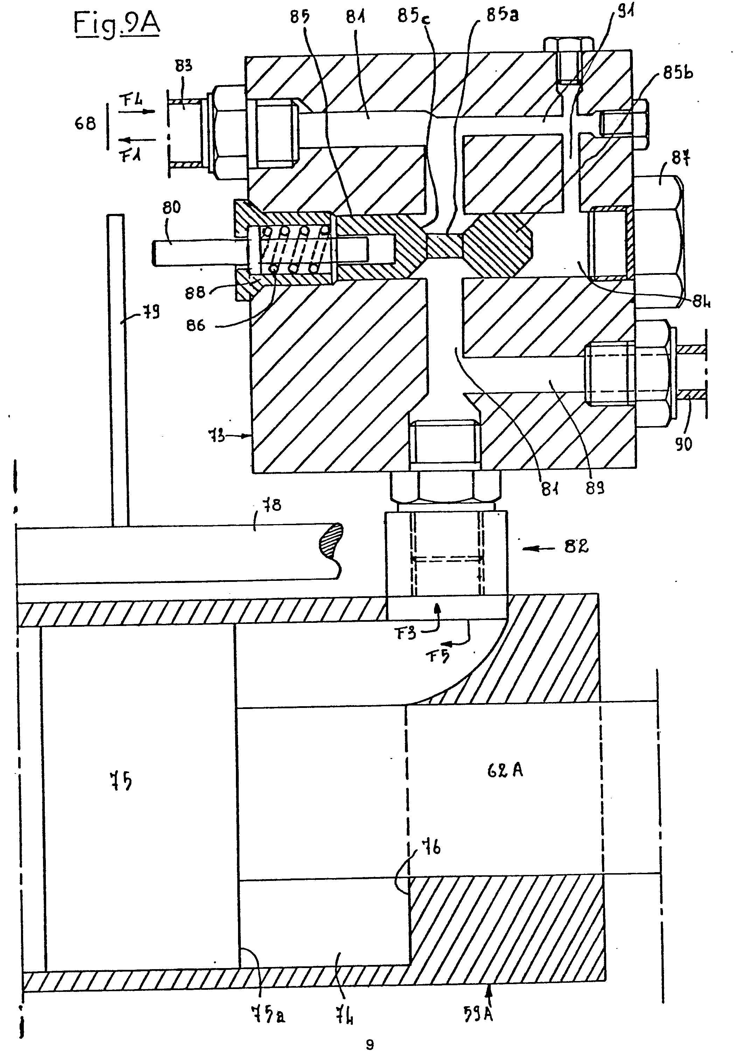

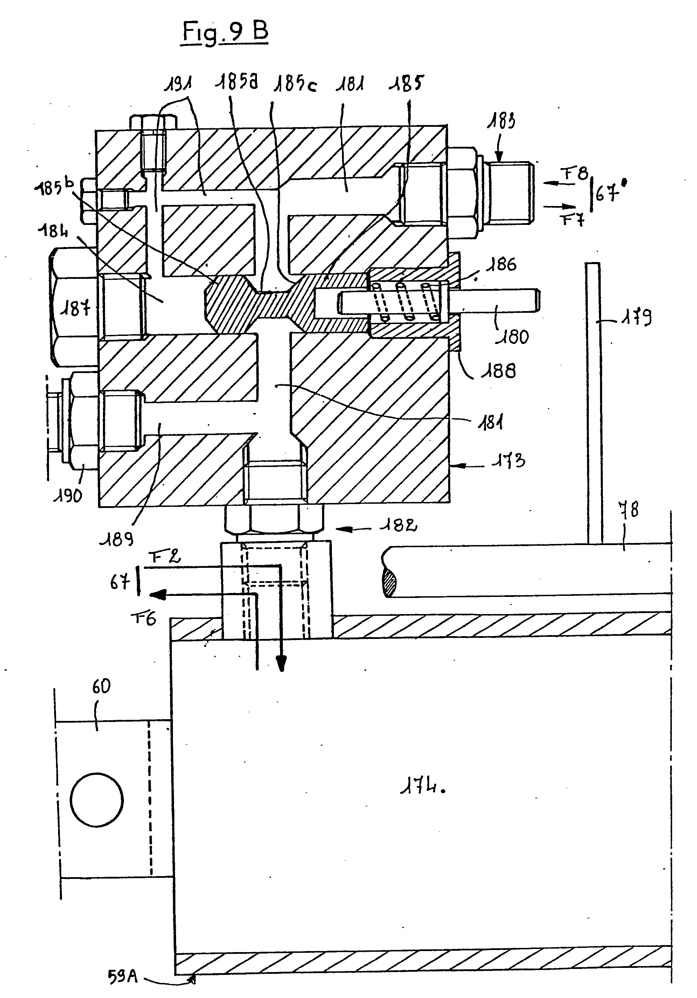

L'ensemble des figures 9A et 9B est une coupe des blocs obturateurs de la figure 8 et de la partie correspondante du vérin associé.

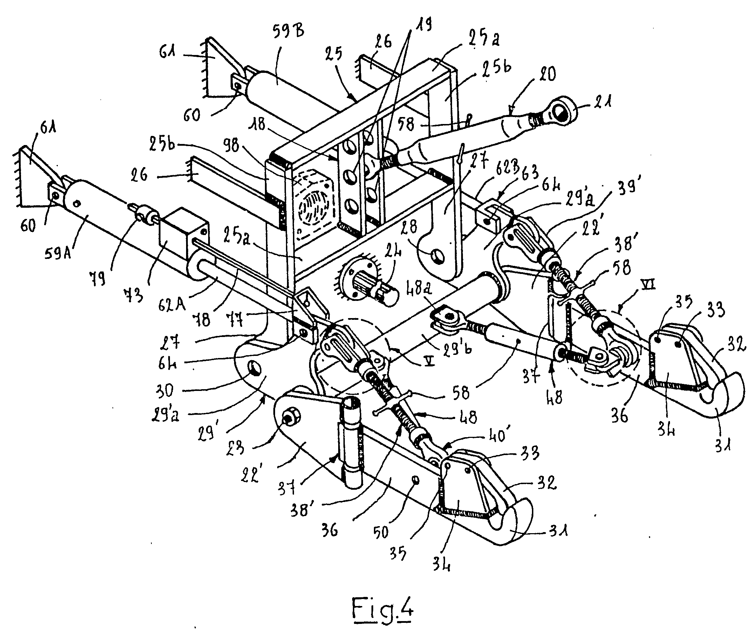

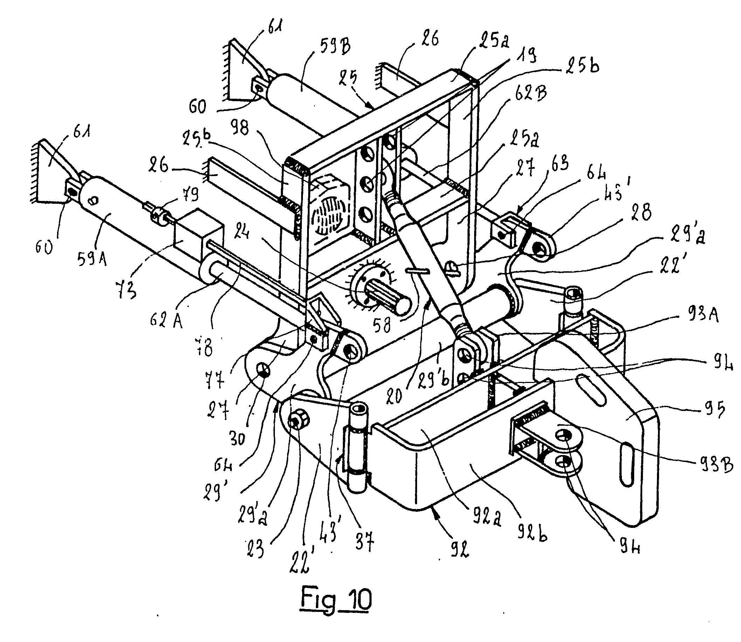

La figure 10 est une perspective analogue à la figure 4 et montrant comment on peut relier un outil aussi près que possible de l'essieu du tracteur, en utilisant simultanément les trois points de l'attelage.

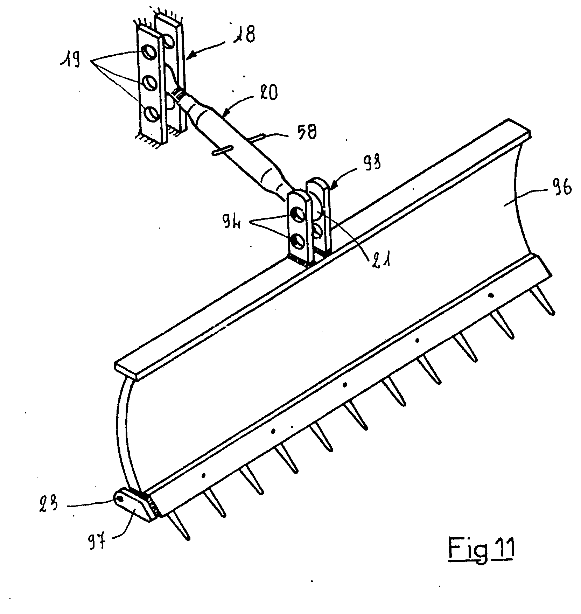

La figure 11 est une perspective montrant la fixation d'un outil à la barre de poussée de l'attelage et aux barres de traction non représentées.

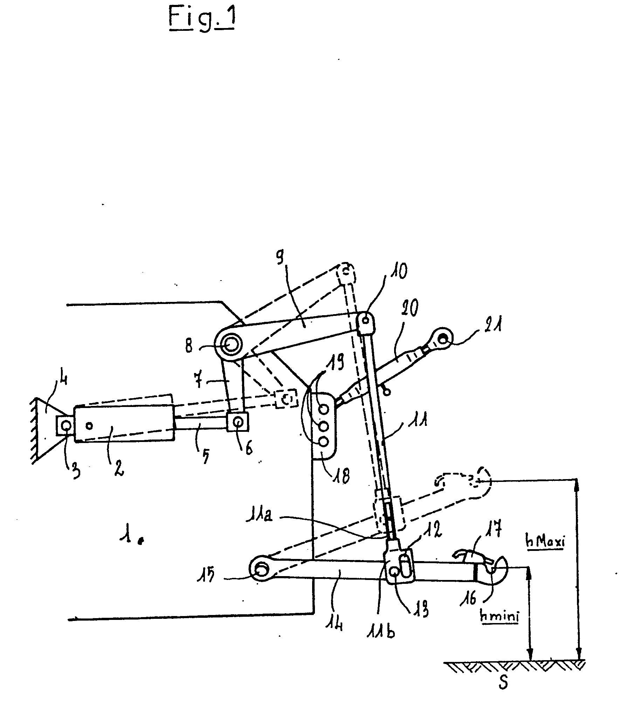

L'attelage représenté figure 1 est un attelage "trois points" classique situé à l'arrière d'un tracteur 1, qui comprend essentiellement un vérin hydraulique 2, pivoté en 3 à une pièce 4 fixée au tracteur 1, et dont la tige 5 est pivotée en 6 à une extrémité d'une bielle 7. Cette bielle est pivotée à son extrémité opposée à un axe horizontal 8 solidaire du tracteur 1 et auquel sont pivotés deux bras supérieurs 9. Aux extrémités opposées de ces bras sont pivotées en 10 deux tringles tubulaires de levage 11. La longueuer de ces tringles est réglable grâce au fait qu'une vis 11a insérée dans l'extrémité inféfieure de chacune d'elles peut faire plus ou moins saillie vers le bas et est solidaire d'une chape 11b percée d'une part de deux lumières alignées 12 plus ou moins verticales et d'autre part de deux trous alignés 13. Deux barres de traction 14 sont pivotées en 15 au tracteur 1 et sont articulées aux chapes 11b des tringles 11 grâce à des axes (non représentés) insérés soit dans les lumières 12 soit dans les trous 13. A l'extrémité libre de chacune des barres 14 est fixé un crochet 16 destiné à recevoir un organe d'accrochage (non représenté) d'un outil, qui peut être bloqué par un dispositif de verrouillage 17. Au tracteur 1 est également fixée une chape verticale 18 dans laquelle peut être montée de façon pivotante et amovible, dans une paire de trous 19 alignés horizontalement, une extrémité d'une barre de poussée 20 dont l'autre extrémité porte une articulation 21. L'actionnement du vérin de l'attelage est réalisé par des valves et des leviers de commande non représentés.

Sur la figure 1, on a représenté en traits pleins l'attelage dans la position de hauteur minimale des barres de traction 14 par rapport au sol S, et en tirets l'attelage dans la position de hauteur maximale de ces barres.

Dans le cas d'un attelage frontal, la réalisation est pratiquement la même, mais l'actionnement est produit par au moins un vérin plus ou moins vertical.

Un inconvénient de ce type d'attelage est qu'il existe quatre axes de rotation (en 3, 8, 15 et 19) et cinq articulations (en 6, 10, 12 ou 13, 16 et 21), les deux dernières ne concernant que l'outil associé à l'attelage.

L'invention a pour objet de supprimer cet inconvénient et de réaliser un attelage ayant de meilleures qualités comme attelage frontal grâce d'une part à l'utilisation de deux vérins de commande horizontaux associés chacun à une barre de traction et dont la position évite toute gêne lors de l'utilisation des phares du tracteur ou de la prise de force frontale, et d'autre part à l'utilisation d'un bloc obturateur, qui agit sur les deux vérins pour faciliter le réglage de la position en hauteur des crochets des barres de traction.

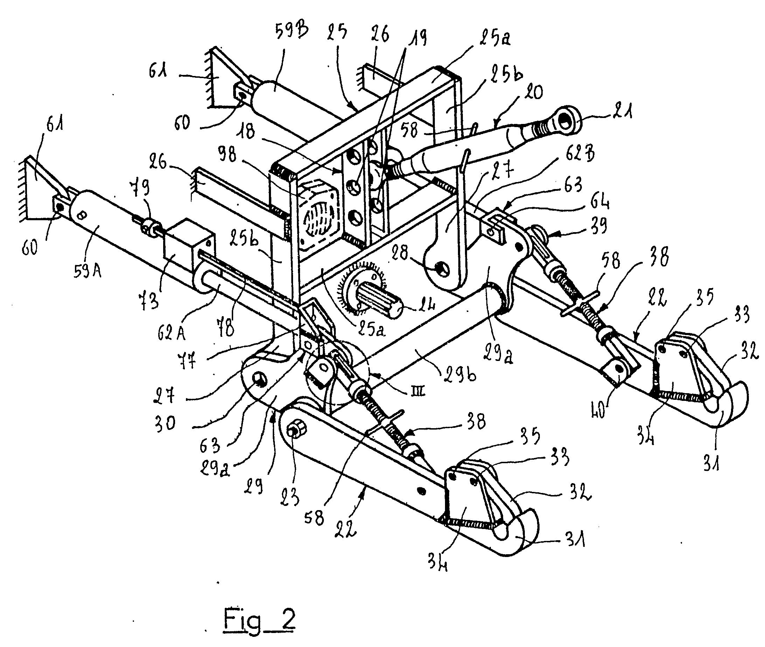

On voit sur les figures 2 à 6 qu'un attelage "trois points" suivant l'invention est fixé à un véhicule (non représenté) par un dispositif comprenant essentiellement, d'une part, une chape verticale 18 analogue à celle de la figure 1 et percée de paires de trous 19 alignés horizontalement pour recevoir une barre de poussée 20 identique à celle de la figure 1, et d'autre part deux barres de traction 22 ou 22' montées pivotantes en 23. Dans le plan vertical médian de la chape 18 et au-dessous d'elle se trouve une prise de force 24. L'ensemble comprenant la chape 18 et les axes de pivotement 23 des barres 22 ou 22' est conçu de façon à pouvoir s'adapter aussi bien à l'arrière qu'à l'avant d'un tracteur, et la prise de force 24 peut être elle aussi à l'avant ou à l'arrière.

La chape 18 relie les milieux des grands côtés horizontaux 25a d'un cadre rectangulaire 25 dont les petits côtés verticaus 25b portent des pièces 26 de fixation au tracteur, se prolongent vers le bas en 27 et sont percés au voisinage de leurs extrémités inférieures de trous 28 destinés à recevoir des axes de pivotement (non représentés) pour un palonnier 29 ou 29' constitué de deux flasques verticaux 29a ou 29'a, reliés par une entretoise horizontale 29b ou 29'b de préférence tubulaire, et percés de trous 30 pour le passage d'axes (non représentés) destinés à assurer une liaison pivotante avec les flasques 29a ou 29'a. Les pivots 23 des barres de traction 22 ou 22' se logent dans des trous (non représentés) des flasques 29a ou 29'a.

Dans le mode de réalisation de la figure 2, les barres de traction 22 sont monoblocs et portent à leur extrémité libre un crochet 31 dans lequel un dispositif d'accrochage, par exemple un tourillon du véhicule ou de l'outil à tirer, peut être bloqué par un dispositif 32 pivoté en 33 à deux flasques 34 soudés de part et d'autre de la barre 22; une goupille insérable dans deux troux alignés 35 des flasques 34 permet d'immobiliser le dispositif 32 en position de blocage.

Dans le mode de réalisation de la figure 4, les barres de traction sont en deux éléments. L'un 22', est pivoté en 23 au flasque 29'a associé, et c'est l'autre, 36, qui porte le crochet 31 muni à son extrémité libre d'un dispositif de blocage 32 à 35; l'élément 36 est pivoté à la partie 22' par une charnière verticale 37. Comme on le voit, cette charnière comprend deux éléments cylindriques creux solidaires de l'élément 22' et un élément médian solidaire de l'élément 36; l'assemblage se fait par un axe vertical non représenté.

Dans les modes de réalisation des figures 2 et 4, il existe en outre deux vis de réglage 38 ou 38' pivotées par des pièces 39 ou 39' aux flasques 29a ou 29'a associés et en 40 ou 40' au voisinage du crochet 31 correspondant. Ces vis servent à régler l'inclinaison des barres de traction par rapport aux axes 23 et constituent donc l'équivalent des tringles 11 de la réalisation connue de la figure 1 mais sans exiger, comme elles, la bielle 7 et les bras 9.

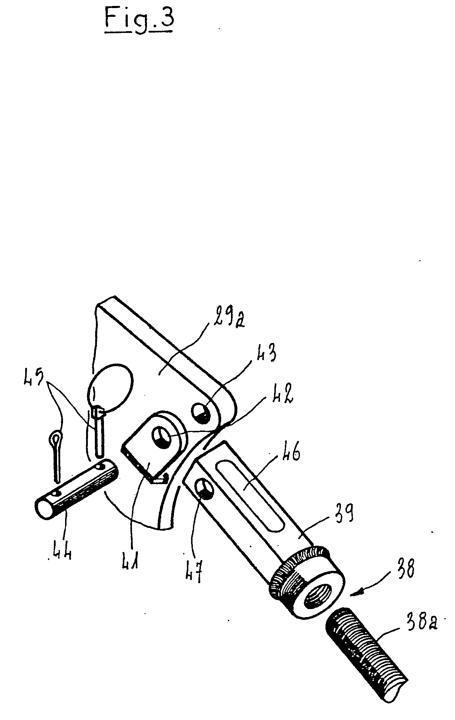

Le mode de réalisation des articulations 39 est visible plus en détail sur la figure 3. A l'extérieur de chaque flasque 29a est soudée une plaque 41 percée d'un trou 42 aligné avec un trou 43 du flasque pour recevoir un axe 44 maintenu en place par deux goupilles 45. L'extrémité 39 du dispositif 38 dans laquelle est vissée une extrémité d'une vis 38a est de forme parallélépipédique et joue un rôle analogue à celui de la pièce 11b de la figure 1. A cet effet, elle comporte une lumière longitudinale 46 et un trou transversal 47. On peut donc placer à volonté la pièce 39 soit dans la position représentée, c'est-à-dire avec l'axe 44 traversant les trous 42, 43 et 47, soit avec l'axe 44 traversant les trous 42, 43 et la lumière 46; dans ce dernier cas, la pièce 39 et donc l'ensemble du dispositif 38 possèdent une certaine mobilité par rapport au palonnier 29.

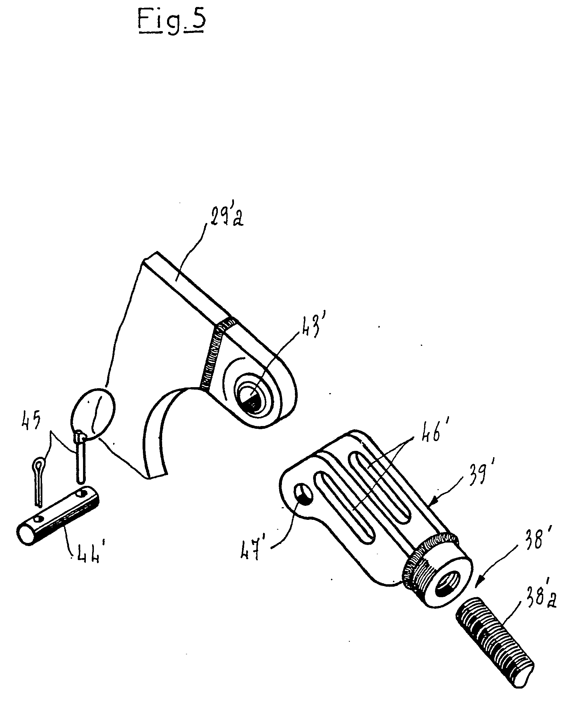

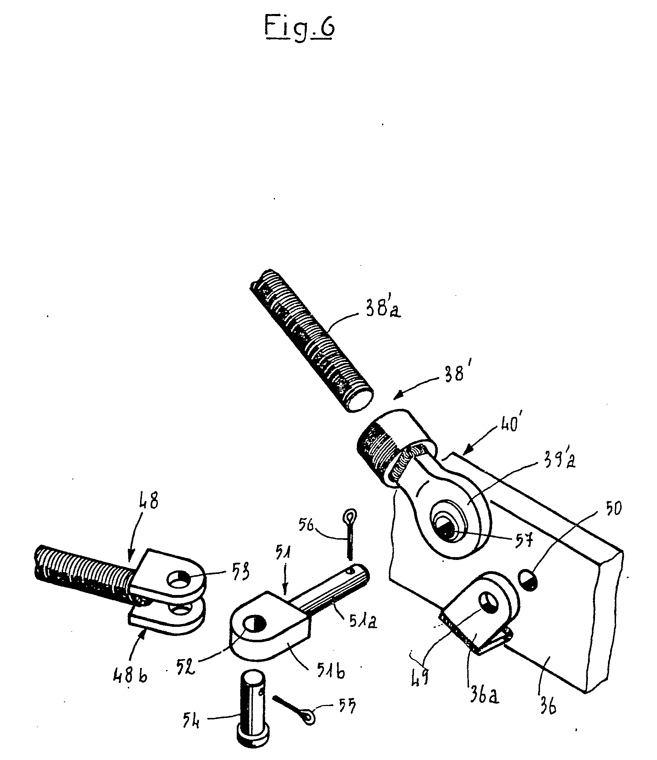

Dans le mode de réalisation de la figure 4, il existe un second dispositif à vis, comportant deux organes extensibles 48 montés en 48a à l'entretoise 29'b du palonnier 29' de façon à pouvoir pivoter autour d'axes verticaux, et pivotés en 40' à la pièce 36 au même endroit que les dispositifs 38'. Certains détails du mode de fixation des pièces 39' et des ensembles 40' vont maintenant être décrits plus complètement avec référence aux figures 5 et 6.

Sur la figure 5, on voit que chaque flasque 29'a ne comporte pas de plaque telle que 41 de la figure 3 mais possède à son extrémité éloignée du vérin une rotule percée d'un trou 43'. La pièce d'extrémité 39' du dispositif 38' est constituée par une chape dont les branches sont percées de lumières 46' et de trous 47' qui jouent le même rôle que la lumière 46 et le trou 47 de la figure 3. Il convient d'ailleurs de préciser que l'on ne peut utiliser le dispositif 38 que dans le cas des attelages de la figure 2.

Sur la figure 6, on voit que la partie 36 de chaque barre de traction possède une plaque soudée 36a percée d'un trou 49 aligné avec un trou 50 ménagé dans la partie 36 et dans lequel on peut introduire la partie 51a formant axe d'une pièce 51 dont une seconde partie 51b peut se loger dans une chape 48b montée à l'extrémité du dispositif 48. Des trous correspondants 52, 53 ménagés respectivement dans les parties 51b, 48b peuvent recevoir un pivot 54 maintenu par une goupille 55, et une autre goupille 56 sert à maintenir en place la partie 51a de la pièce 51. L'extrémité 39'a du dispositif 38' comporte une rotule percée d'un trou 57. L'assemblage des dispositifs 38' et 48 se fait par insertion de l'extrémité 39'a dans la chape 36a par assemblage des pièces 48b et 51 à l'aide de l'axe 54 et de la goupille 55, et l'insertion de l'axe 51a dans les trous 49, 57 et 50, suivie de la mise en place de la goupille 56. De cette façon, les dispositifs 48 sont montés pivotants à leurs extrémités, et l'on peut régler leur longueur en agissant sur un axe de commande 58 de type connu, analogue à ceux que l'on a représentés sur les dispositifs 20, 38 ou 38' (figure 2, 4, 10 et 11), pour faire pivoter les pièces 36 autour des axes des articulations 37 et les adapter à des outils hors standard.

On va maintenant décrire le système d'actionnement des barres de traction 22 ou 22'.

D'après l'invention, deux vérins hydrauliques à simple ou à double effet 59A, 59B (figures 2, 7, 8 et 10) sont fixés de façon pivotante en 60 à des pièces 61 solidaires du tracteur, leurs tiges 62A, 62B sont pivotées par des chapes 63 et des pivots 64 à la partie supérieure des flasques 29a et 29'a du palonnier 29 ou 29', et les pivots 23 des barres 22 ou 22' se trouvent à la partie inférieure de chaque flasque 29a ou 29'a.

Sur la majorité des tracteurs agricoles, la pompe du système hydraulique est en prise constante avec un pignon moteur. Lorsque toutes les manettes de commande sont au point mort, il se produit un courant d'huile ininterrompu et sans pression dans le circuit "bâche-pompe-bâche". Une valve principale intégrée au bloc de relevage commande l'attelage "trois points" lorsque celui-ci est placé à l'arrière. Sur ce bloc de relevage peuvent être placées plusieurs valves auxiliaires possédant chacune une manette propre et destinée à la commande de vérins auxiliaires pour des machines agricoles portées ou tractées.

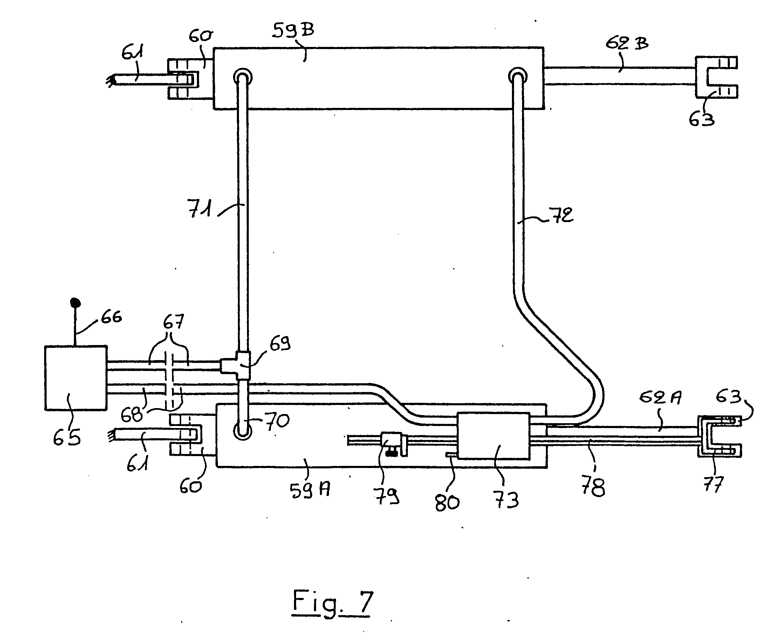

C'est à l'une de ces valves auxiliaires, 65, (figures 7 et 8) qu'est relié l'attelage "trois points" suivant l'invention. La valve auxiliaire 65 est actionné par une manette 66 déplacable entre deux positions actives avec retour automatique au point mort et possède deux connexions 67, 68 (figure 7). Suivant la position de la manette 66, l'huile arrive soit par la connexion 67 soit par la connexion 68 depuis la bâche ou la chambre du vérin associé dont le volume est le plus faible et sort soit par la connexion 68 soit par la connexion 67 en direction de la face à actionner du piston du vérin considéré.

Lorsque les vérins 59A, 59B sont utilisés en simple effet, c'est-à-dire que la pression d'huile est toujours sur la même face de piston, une des deux sorties de la valve auxiliaire précitée est bouchée, tandis que la chambre correspondant à la face du piston non sollicitée est mise à l'air libre par un reniflard.

Mais d'après l'invention, on utilise de préférence des vérins à double effet, et c'est à propos de cette réalisation que l'on va décrire le fonctionnement du dispositif de commande des barres de traction 22 ou 22'.

La descente de ces barres peut se faire par simple gravité ou sous l'action des vérins 59A et 59B. Dans les deux cas, l'huile sort de la valve 65 par le conduit 67 et arrive par un raccord en T 69 et par des conduits 70 et 71 aux extrémités des vérins 59A, 59B situées à gauche sur la figure 7. L'huile contenue dans les parties des vérins situées à droite de la figure et qui sont reliées par un conduit 72 revient à la valve auxiliaire 65 précitée par le conduit 68. Pour plus de simplicité, on n'a pas représenté les conduits 67 à 72 sur les figures 2, 4 et 10.

Mais il est en pratique nécessaire, notamment dans le cas d'un attelage frontal, de limiter la descente des barres de traction 22 ou 22'. Or l'opérateur ne peut apprécier avec exactitude, depuis le poste de conduite, le niveau exact de l'outil par rapport au sol, chaque fois qu'après une manoeuvre de levage en bout de champ, il veut remettre l'outil frontal dans sa position précédente. Le plus simple est alors de prolonger légèrement le temps de maintien en position "descente" de la manette 66 de la valve auxiliaire 65, ce qui est facile car la centrale hydraulique du tracteur est munie d'un clapet taré de sécurité évitant une surpression dommageable. C'est pourquoi, d'après une caractéristique importante de l'invention, on associe à l'ensemble des vérins 59A, 59B au moins un bloc obturateur 73 (figures 2, 4, 7 à 9A et 10) qui est porté par le vérin 59A et dont le rôle est d'arrêter le mouvement vers le bas (descente) des barres de traction 22 ou 22' dans la position désirée, soit enfin de course, soit à une hauteur déterminée.

Mais la présence d'un seul bloc obturateur 73 ne permet pas de régler la position de hauteur désirée pour les barres de traction. Aussi, sur les figures 8, 9A et 9B, on voit que le vérin 59A comprend deux blocs obturateurs identiques 73 et 173 associés aux deux chambres 74 et 174 du vérin dans lesquelles se déplace un piston 75 et qui contiennent de l'huile. Pour arrêter la descente des barres de traction 22 ou 22′, il suffit, que cette descente se fasse par gravité ou non, d'empêcher l'huile contenue dans la chambre 74 (figure 9A) située entre la face 75 a du piston 75 et la butée 76 de fin de course de ce piston, de revenir à la valve 65. A cet effet, la chape 63 de la tige 62A porte à son sommet (figures 2, 4, 7, 8 et 10) une autre chape, 77, à laquelle est fixée une extrémité d'une pièce, par exemple une tige 78, qui peut ou non coulisser à travers les blocs 73 et 173, qui est fixée à la partie supérieure du vérin 59A par des moyens quelconques non représentés, et qui est munie d'une butée réglable 79 ou de deux butées réglables 79 et 179 et destinée(s) à venir en contact avec un poussoir 80 ou 180 (figures 2, 4, et 7 à 10) dont le rôle sera décrit plus loin.

Sur la figure 9A, on voit que le bloc obturateur 73 est percé d'un alésage 81 à angle droit dont l'entrée est reliée en 82 à la chambre 74 du vérin et la sortie est reliée au conduit 68 (figure 8) par un raccord 83 comme indiqué par la flèche F1. Dans un alésage 84 perpendiculaire à l'alésage 81 et en communication avec lui peut coulisser un tiroir 85 actionnable par le poussoir 80 et comportant une partie 85a de diamètre réduit qui n'empêche pas la circulation d'huile dans l'alésage 81. Entre le tiroir 85 et la paroi extérieure du bloc 73 est inséré un ressort 86, et l'alésage 84 est obturé à ses extrémités respectives par une vis d'obturation 87 et par un boulon creux 88 dans lequel se trouve le ressort 86. Un alésage 89 parallèle à l'alésage 84 part de l'alésage 81 et aboutit à un raccord 90 auquel est relié le conduit 72 (figure 7) qui aboutit à l'extrémité correspondante du vérin 59B. Enfin, un alésage 91 formant un angle droit et de faible diamètre relie les alésages 81 et 84.

·Sur la figure 9B, on voit le bloc obturateur 173 dont les éléments sont disposés symétriquement à ceux de la figure 9A et leur sont identiques. La chambre 174 du vérin peut, suivant le cas, être reliée par un raccord 182 à l'alésage 181 (dans le cas de la figure 8), ou directement au conduit 67 (dans le cas de la figure 7).

On va maintenant décrire plus en détail le fonctionnement de l'installation. Dans le cas de la figure 7, le fonctionnement du bloc obturateur 73 est le suivant: ou bien de l'huile arrive, par le conduit 67, le raccord 69 et les conduits 70 et 71, à l'extrémité gauche des vérins 59A et 59B (comme on le voit sur la figure 7 et comme l'indiquent la flèche F2 et la référence 67 sur la figure 9B), dans le cas de vérins à double effet, ou bien de l'air est introduit par des reniflards (non représentés) qui remplacent les extrémités des conduits 70 et 71 de la figure 7 dans le cas de vérins à simple effet. L'huile contenue dans la chambre 74 traverse le raccord 82 dans le sens de la flèche F3 de la figure 9A et sort suivant la flèche F1 en direction de la valve 65 par le raccord 83 et le conduit 68, ainsi que l'huile arrivant de la chambre correspondante du vérin 59B par le conduit 72, le raccord 90 et l'alésage 89. Lorsque la butée réglable 79 arrive en contact avec le poussoir 80, celui-ci se déplace vers la droite et entraîne dans cette direction le tiroir 85 jusqu'à ce que ce dernier vienne buter contre la vis 87. L'alésage 81 est alors obturé, et le piston 75 de chaque vérin est bloqué en conséquence. Les barres de traction 22 ou 22′ occupent alors la position basse désirée.

Mais en pratique, il est nécessaire que les pistons 75 des vérins 59A et 59B puissent reprendre sans difficulté leur déplacement vers la gauche des figures 7 à 9 pour permettre de soulever les barres de traction 22 ou 22′ en envoyant de l'huile à la droite des vérins, lorsque le tiroir 85 est en butée de fin de course contre la vis 87. A cet effet, on actionne la manette 66 de la valve 65, et de l'huile arrive par le conduit 68, dans le sens de la flèche F4, au raccord 83 et à la partie supérieure horizontale de l'alésage 81 et pénètre dans l'alésage 91 puisque la partie verticale de l'alésage 81 est obturée par le tiroir 85. Or, comme le montre la figure 9A, ce tiroir possède un extrémité biseautée 85b, et l'huile agit sur elle et pousse le tiroir vers la gauche en comprimant le ressort 86 mais sans déplacer le poussoir 80, qui est toujours en contact avec la butée 79. Ce léger déplacement du tiroir amène une autre surface biseautée, 85c, qui forme le raccordement entre la partie de grand diamètre du tiroir et la partie 85a de plus faible diamètre, en alignement partiel avec l'alésage 81, de sorte qu'une petite quantité d'huile sous pression peut alors arriver suivant la flèche F5, et via l'alésage 81 et le raccord 82, dans la chambre 74, ce qui amène un déplacement vers la gauche du piston 75; l'huile contenue à la gauche de ce piston revient alors à la valve 65 par les contuits 70, 71 et 67, dans le sens de la flèche F6 de la figure 9B, dans le cas de vérins à double effet. Lorsque le tiroir 85 a repris sa position de la figure 9A, de l'huile à la pression maximale arrive à la droite du vérin 59A par le raccord 82 et à la droite du vérin 59B par l'alésage 89, le raccord 90 et le conduit 72, ce qui soulève les barres de traction 22 ou 22′ jusqu'à leur hauteur maximale ou jusqu'à ce que l'opérateur actionne la valve 65.

Dans le cas de la figure 8, l'huile arrive par le conduit 68 et le raccord 83 à l'alésage 81 du bloc obturateur 73 et, de là, d'une part, par l'alésage 89, le raccord 90 et le conduit 72, à l'extrémité droite du vérin 59B, et d'autre part, par le raccord 82, à la chambre 74 du vérin 59A. L'huile située dans la chambre 174 du vérin passe par le raccord 182 (et non directement suivant la flèche F6 comme dans le cas de la figure 7) à l'alésage 181 du bloc 173 et sort par le conduit 67′, dans le sens de la flèche F7, en direction de la valve 65, en même temps qui l'huile arrivant de la partie gauche du vérin 59B par le conduit 71' (figure 8), le raccord 190 (figure 9b) et les alésages 189 et 181. La piston 75 se déplace vers la gauche, en entraînant la tige 78 et donc la butée 179 jusqu'à ce que celle-ci arrive en contact avec le poussoir 180. La poursuite du mouvement déplace vers la gauche le tiroir 185, ce qui obture l'alésage 181 et bloque le piston 75 pour chaque vérin. Les barres de traction 22 ou 22' occupent alors la position haute désirée, déterminée par le réglage de la butée 179 sur la tige 78.

Il est, bien entendu, désirable de pouvoir ensuite abaisser les barres de traction aussi rapidement que possible. En conséquence, d'une façon analogue à celle qui a été décrite précédemment, l'opérateur actionne la manette 66 de la valve 65 et de l'huile arrive par le conduit 67' au raccord 183, suivant la flèche F8, suit les alésages 181 et 191, et fait revenir vers la droite le tiroir 185 en comprimant le ressort 186. De l'huile arrive alors, d'une part, par l'alésage 189, le raccord 190 et le conduit 71', à la gauche du vérin 59B, et d'autre part, par le raccord 182, dans la chambre 174 du vérin 59A, ce qui déplace le piston 65 vers la droite.

Si l'on veut être certain que les barres de traction restent à coup sûr dans la position qu'elles viennent de prendre à la façon indiquée précédemment, soit en position basse, soit en position haute, on peut prévoir un dispositif d'alarme approprié qui signale le moment où le contact cesse entre le poussoir 80 ou 180 et la butée 79 ou 179. Ce dispositif peut, par exemple, être un circuit électrique relié d'une part au poussoir et d'autre part à la butée et qui est ouvert, déclenchant ainsi un signal, lors de la séparation de ces deux organes. Un tel dispositif est facile à monter sur le vérin 59A.

Il est à noter que si le bloc obturateur 73 peut, en pratique, être utilisé avec des vérins à simple effet pour relever les barres 22 ou 22' puisqu'il est possible de laisser ces barres descendre par gravité, le bloc 173 n'est utilisable qu'avec des vérins à double effet.

Si l'on se reporte maintenant à la figure 10, on voit que les pièces 36 ont été démontées et remplacées par des éléments qui doivent être rapprochés du tracteur. Par example, un coffre 92 porte sur sa paroi 92a articulée en 37 une chape verticale 93A percée de trous 94 pour recevoir l'extrémité 21 de la barre de poussée 20, et sur sa paroi 92b une chape horizontale 93B percée de trous 94 pour recevoir un outil non représenté. Enfin, un élément 95 de lestage avant peut-être fixé sur la paroi 92a, soit sur la paroi 92b.

Sur la figure 11, on voit une lame niveleuse 96 qui porte à son sommet une chape 93' percée de trous 94 pour recevoir l'extrémité 21 de la barre de poussée 20. Dans ce cas, les barres de traction 22 ou 22' sont démontées, et la partie inférieure de l'outil 96 est directement pivotée aux axes 23 par des pièces 97 soudées et faisant saillie en direction du tracteur (non représenté).

On signalera enfin que l'actionnement des barres de traction au moyen de deux vérins horizontaux parallèles et l'utilisation d'un cadre de fixation au tracteur tel que 25, 27 associé à un palonnier tel que 29 ou 29' permet, dans le cas d'un attelage frontal, l'utilisation normale, sans aucune gêne, des phares du tracteur dont un seul est représenté en 98 sur les figures 2, 4 et 10, de même que celle de la prise de force frontale 24 et de l'arbre à cardan (non représenté) qui la prolonge.

Un autre avantage de l'invention est la réduction du nombre des articulations (simples ou doubles) des organes d'actionnement des barres de traction. La liaison entre chaque vérin et la barre associée se fait en pratique à l'aide d'une seule pièce, le dispositif 38 ou 38'.

Un troisième avantage est la possibilité, grâce à l'emploi d'au moins un bloc obturateur 73, de régler avec précision la position angulaire des barres de traction lorsque l'utilisation de l'attelage implique une succession régulière de ces mouvements vers le haut ou vers le bas.

**Revendications**

1. Attelage "trois points" utilisable aussi bien à l'avant qu'à l'arrière d'un engin ou d'un véhicule quelconque, par exemple d'un tracteur, comprenant deux barres de traction, capables de pivoter toutes deux dans des plans verticaux sous l'action de deux vérins (59A et 59B) reliés à une source commune de liquide et l'un à l'autre (en 71 et 72 ou en 71' et 72') de façon à fonctionner simultanément et dont les cylindres sont montés pivotants (en 60) par rapport au véhicule; une chape (18) à laquelle peut être pivotée de façon amovible (en 19) une extrémité d'une barre de poussée (20) située dans un plan vertical à mi-distance entre les deux barres de traction et dans lequel se trouve aussi une prise de force (24); et des dispositifs à vis (38 ou 38' et 48) dont la longueur est réglable et dont une extrémité est fixée au voisinage de l'extrémité libre (31) de chacune des barres de traction précitées; et caractérisé en ce que: a) il possède un palonnier rigide (29 ou 29') constitué par une entretoise horizontale (29b ou 29'b) de préférence tubulaire dont les extrémités sont fixées rigidement à deux flasques verticaux (29a ou 29'a) percés de trous alignés (30) pour recevoir chacun un axe de pivotement associé à un dispositif (25 à 27) pour la fixation du palonnier au véhicule; b) à chacun des flasques verticaux précités sont fixés de façon à pivoter autour d'axes horizontaux la tige (62A ou 62B) d'un des vérins (59A ou 59B) précités, la seconde extrémité d'une des barres de traction (22 ou 22' et 36) précitées, et l'autre extrémité de chacun des dispositifs à vis (38 ou 38' et 48); c) le dispositif de fixation du palonnier au véhicule est constitué par un cadre rigide rectangulaire vertical (25) dont les grands côtés, horizontaux, (25a), sont reliés au milieu de leur longueur par la chape (18) précitée et dont les petit côtés, verticaux, (25b) se prolongent vers le bas (en 27) et sont percés de trous (28) alignés horizontalement avec ceux, (30), des flasques verticaux (29a ou 29'a) du palonnier rigide (29 ou 29'); d) les deux vérins (59A et 59B) sont reliés au moyen d'une valve auxiliaire (65) à commande manuelle (66) à la source commune de liquide précitée, qui comprend une bâche et une pompe dont le fonctionnement, provoqué par la valve précitée, peut, de façon connue, être arrêté par un dispositif de sécurité qui agit en cas de surpression; et e) au moins un bloc obturateur (73), associé à l'un (59A) des vérins et muni d'un poussoir (80) qui vient en contact avec une butée (79) associée lorsque la course de la tige (62A) du vérin précité atteint la position qui correspond à l'inclinaison désirée pour les barres de traction, comprend un alésage à angle droit (81) relié d'une part (en 83) à la valve auxiliaire (65) et d'autre part à l'extrémité correspondante de chacun des deux vérins (59A, 59B), un tiroir (85) mobile entre une position de repos qui permet l'écoulement du liquide à travers l'alésage précité, et une position de fin de course dans laquelle l'alésage est obturé et le liquide issu de la valve auxiliaire (65) peut venir frapper par une déviation une extrémité biseautée (85b) du tiroir et repousser ce dernier de façon à permettre au liquide d'arriver directement par l'alésage précité à ladite extrémité correspondante de chacun des deux vérins, ce qui provoque un soulèvement des barres de traction (22 ou 22' et 36).

2. Attelage suivant la revendication 1, caractérisé en ce que chaque dispositif à vis (38 ou 38') qui transmet le mouvement des tiges (62A ou 62B) des vérins (59A ou 59B) aux barres de traction (22 ou 22' et 36) possède à son extrémité reliée au palonnier (29 ou 29') une pièce (39 ou 39') capable d'être montée pivotante soit de manière fixe autour d'un axe déterminé à l'avance, soit de manière à pouvoir se déplacer longitudinalement.

3. Attelage suivant la revendication 2, caractérisé en ce que la pièce (39) précitée est de forme parallélépipédique, est vissée par une extrémité à une vis (38a) du dispositif à vis (38) précité, peut être introduite dans une chape constituée par le flasque associé (29a) du palonnier (29) et par une plaque (41) soudée à ce flasque, et est percée d'une part d'une lumière longitudinale (46) et d'autre part de deux trous (47) perpendiculaires à cette lumière et situés au voisinage de son extrémité libre, de sorte que, suivant la position de cette pièce, on peut introduire un axe de pivotement (44) dans les trous (42, 43) ménagés dans la chape précitée et soit dans les trous (47) précités de la pièce, soit dans la lumière (46) précitée.

4. Attelage suivant la revendication 2, caractérisé en ce que la pièce (39') précitée est constituée par une chape capable de s'emboîter sur le flasque associé (29'a) du palonnier (29'), dans la base de laquelle est visée la vis associée (38'a) et dont chaque branche est percée d'une lumière (46') et d'un trou adjacent (47') voisin de l'extrémité libre, de sorte que l'axe de fixation au flasque (29'a) du palonnier (29') peut être introduit à volonté dans les trous alignés (47') ou dans les lumières (46') de la chape (39') et, ainsi, soit bloquer celle-ci en position, soit lui permettre un certain coulissement par rapport aux flasques.

5. Attelage suivant la revendication 2, dans lequel les barres de traction (22) sont monoblocs, et caractérisé en ce que l'extrémité (39) de chaque dispositif à vis (38) est pivotée au flasque (29a) associé du palonnier rigide (29).

6. Attelage suivant la revendication 2, dans lequel chaque barre de traction est formée de deux éléments (22' et 36) articulés l'un à l'autre et dans lequel il existe un premier dispositif à vis (38') et un second disposiif à vis (48) et caractérisé en ce que: a) un des éléments (36) peut pivoter horizontalement autour d'un axe vertical; b) une extrémité (39') de chacun des premiers dispositifs à vis (38') est pivotée au flasque (29'a) associé du palonnier (29'); et c) une extrémité correspondante de chacun des seconds dispositifs à vis (48) est pivotée (en 48a) à l'entretoise (29'b) du palonnier (29').

7. Attelage suivant la revendication 6, caractérisé en ce que la fixation commune (40') des premiers et seconds dispositifs à vis (38' et 48) à l'élément pivotant (36) de chaque barre de traction comprend une chape (36a) soudée à l'élément pivotant (36) et une pièce (51) comprenant une partie (51a) formant axe et capable d'être introduite dans des trous (49, 50) de la chape (36a) et de l'élément pivotant (36) et dans une extrémité (39'a) solidaire du premier dispositif (38'), et une extrémité (51b) capable d'être introduite et de pivoter dans une chape (48b) solidaire du second dispositif (48), la fixation des axes (51a et 54) se faisant à l'aide de goupilles respectives (56, 55).

8. Attelage suivant la revendication 6, caractérisé en ce qu'on remplace l'élément pivotant (36) de chaque barre de traction par une pièce (92), pivotée (en 37) à l'élément restant des barres de traction (22'), qui possède une chape verticale (93A) pour sa liaison avec l'extrémité (21) de la barre de poussée (20) et, de préférence, une chape horizontale (93B), et à laquelle peut être fixé un élément de lestage (95).

9. Attelage suivant la revendication 1, caractérisé en ce que les barres de traction (22 ou 22' et 36) sont démontées et que sur les axes (23) de fixation au palonnier (29') sont montées des pièces (97) solidaires d'un outil (96) dont la partie supérieure porte une chape (93') pour la fixation de l'extrémité (21) de la barre de poussée (20).

## Patentansprüche

1. Dreipunkt-Kupplung zur Verwendung sowohl an der Front als auch am Heck einer Maschine oder eines beliebigen Fahrzeuges, zum Beispiel eines Traktors, enthaltend zwei Zugstangen, die sich beide durch Einwirkung von zwei Hebern (59A und 59B), die mit einer gemeinsamen Flüssigkeitsquelle sowie untereinander (in 71 und 72 bzw. in 71' und 72') verbunden sind, so daß sie gleichzeitig arbeiten, und deren Zylinder (in 60) in Bezug auf das Fahrzeug drehbar befestigt sind, in senkrechten Ebenen drehen können; eine Gabel (18), an welcher (in 19) abnehmbar ein Ende einer Schubstange (20) drehbar befestigt ist, wobei diese Stange in einer senkrechten Ebene in der Mitte zwischen den beiden Zugstangen angeordnet ist und sich in dieser Ebene auch eine Zapfwelle (24) befindet; ferner Schraubvorrichtungen (38 bzw. 38' und 48), deren Länge einstellbar ist und von denen ein Ende in der Nähe des freien Endes (31) jeder der oben genannten Zugstangen befestigt ist, dadurch gekennzeichnet, daß a) sie einen starren Stützarm (29 bzw. 29') aufweist, der von einem waagrechten, vorzugsweise rohrförmigen Steg (29b bzw. 29'b) gebildet ist, dessen Enden starr an zwei senkrechten Wangen (29a bzw. 29'a) befestigt sind, die von fluchtenden Löchern (30) zur Aufnahme je einer Drehachse durchbrochen sind, die mit einer Vorrichtung (25 bis 27) zur Befestigung des Stützarmes am Fahrzeug verbunden ist; b) an jeder der erwähnten senkrechten Wangen um waagrechte Achsen drehbar befestigt sind: die Stange (62A bzw. 62B) eines der genannten Heber (59A bzw. 59B), das zweite Ende einer der oben genannten Zugstangen (22 bzw. 22' und 36) sowie das andere Ende jeder der Schraubvorrichtungen (38 bzw. 38' und 48); c) die Befestigungsvorrichtung des Stützarmes am Fahrzeug aus einem starren, rechteckigen, senkrechten Rahmen (25) besteht, dessen große waagrechte Seiten (25a) in der Mitte ihrer Länge mit der erwähnten Gabel (18) verbunden sind und dessen kleine senkrechte Seiten (25b) sich nach unten (in 27) verlängern und von Löchern (28) durchbrochen sind, die waagrecht mit den Löchern (30) der senkrechten Wangen (29a bzw. 29'a) des starren Stützarmes (29 bzw. 29') fluchten; d) die beiden Heber (59A und 59B) mittels eines Hilfsventils (65) mit Handbetätigung (66) mit der oben genannten gemeinsamen Flüssigkeitsquelle verbunden sind, die einen Tank und eine Pumpe aufweist, deren durch das erwähnte Ventil ausgelöste Funktion in bekannter Weise durch eine Sicherheitsvorrichtung aufgehoben werden kann, die im Fall einer Überdruckes wirkt; und e) wenigstens ein Sperrblock (73), — der mit einem der Zylinder (59A) verbunden und mit einem Stößel (80) versehen ist, der in Berührung mit einem entsprechenden Anschlag (79) tritt, sobald der Hub der Stange (62A) des oben genannten Hebers die Stellung erreicht, die der gewünschten Neigung der Zugstangen entspricht, — eine Bohrung im rechten Winkel (81) aufweist, die einerseits (in 83) mit dem Hilfsventil (65) und anderseits mit dem entsprechenden Ende jedes der beiden Heber (59A und 59B) verbunden ist, ein Schieber (85) zwischen einer Ruhestellung, in der die Flüssigkeit durch die erwähnte Bohrung abfließen kann, und einer Endstellung beweglich ist, in welcher die Bohrung verschlossen ist und die vom Hilfsventil (65) kommende Flüssigkeit über eine Abzweigung ein abgeschrägtes Ende (85b) des Schiebers erreichen und diesen so bewegen kann, daß die Flüssigkeit durch die schon genannte Bohrung direkt zum besagten entsprechenden Ende jedes der beiden Heber gelangen kann, was eine Hebung der Zugstangen (22 bzw. 22' und 36) bewirkt.

2. Kupplung nach Anspruch 1, dadurch gekennzeichnet, daß jede Schraubvorrichtung (38 bzw. 38'), welche die Bewegung der Stangen (62A bzw. 62B) der Heber (59A bzw. 59B) auf die Zugstangen (22 bzw. 22' und 36) überträgt, an ihrem mit dem Stützarm (29 bzw. 29') verbundenen Ende einen Teil (39 bzw. 39') aufweist, der drehbar an einer vorher festgelegten Achse entweder unverschieblich oder in seiner Längsrichtung verschieblich montierbar ist.

3. Kupplung nach Anspruch 2, dadurch gekennzeichnet, daß der erwähnte Teil (39) die Form eines Parallelepipeds hat, mit einem Ende an einer Schraube (38a) der erwähnten Schraubvorrrichtung (38) angeschraubt ist, in eine Gabel eingesetzt werden kann, die durch die mit dem Stützarm (29) in Verbindung stehende Wange (29a) und durch eine Platte (41) gebildet ist, die an dieser Wange angeschweißt ist, und einerseits von einer länglichen Öffnung (46) und anderseits von zwei auf dies Öffnung senkrechten Löchern (47) durchbrochen wird, die sich nahe seinem freien Ende befinden, so daß man je nach der Stellung dieses Teiles in die Löcher (42 und 43), die in der genannten Gabel angebracht sind, eine Drehachse (44) einbringen kann, und zwar entweder in die erwähnten Löcher (47) des Teiles oder in die genannte Öffnung (46).

4. Kupplung nach Anspruch 2, dadurch gekennzeichnet, daß der genannte Teil (39') von einer Gabel gebildet ist, die geeignet ist, auf die Wange (29'a) zu passen, die mit dem Stützarm (29') in Verbindung steht, wobei am Boden der Gabel die entsprechende Schruabe (38'a) eingeschraubt und jeder ihrer Arme von einer länglichen Öffnung (46') und einem daneben liegenden Loch (47') nahe dem freien Ende durchbrochen ist, so daß die Achse zur Befestigung des Stützarms (29') an der Wange (29'a) je nach Bedarf in die fluchtenden Löcher (47') oder in die länglichen Öffnungen (46') der Gabel (39') eingesetzt werden kann und so die Gabel entweder in ihrer Stellung blockiert oder ihr eine gewisse Verschiebung zu den Wangen gestattet.

5. Kupplung nach Anspruch 2, bei der die Zugstangen (22) aus einem Stück ausgeführt sind, dadurch gekennzeichnet, daß das Ende (39) jeder Schraubvorrichtung (38) an der Wange (29a) drehbar befestigt ist, die mit dem starren Stützarm (29) verbunden ist.

6. Kupplung nach Anspruch 2, bei welcher jede Zugstange aus zwei miteinander gelenkig verbundenen Elementen (22′ und 36) gebildet ist und bei der eine erste Schraubvorrichtung (38′) und eine zweite Schraubvorrichtung (48) vorhanden ist, dadurch gekennzeichnet, daß a) eines der Elemente (36) waagrecht um eine senkrechte Achse drehbar ist; b) ein Ende (39′) jeder der ersten Schraubvorrichtungen (38′) an der mit dem Stützarm (29′a) verbundenen Wange (29′) drehbar befestigt ist; und c) ein entsprechendes Ende jeder der zweiten Schraubvorrichtungen (48) an dem Steg (29′b) des Stützarmes (29′) drehbar (in 48a) befestigt ist.

7. Kupplung nach Anspruch 6, dadurch gekennzeichnet, daß die gemeinsame Befestigung (40′) der ersten und zweiten Schraubvorrichtungen (38′ und 48) am Drehelement (36) jeder Zugstange eine Gabel (36a), die am Drehelement (36) angeschweißt ist, sowie einen Teil (51) aufweist, der einen Abschnitt (51a), der eine Achse bildet und in die Löcher (49) und 50) der Gabel (36a) und des Drehelements (36) sowie in einen Anschlußkopf (39′a) eingesetzt werden kann, der mit der ersten Schraubvorrichtung (38′) kraftschlüssig verbunden ist, sowie ein Ende (51b) hat, das in eine Gabel (48b), die mit der zweiten Schraubvorrichtung (48) kraftschlüssig verbunden ist, eingesetzt werden und sich in dieser drehen kann, wobei die Befestigung der Achsen (51a und 54) mit Hilfe von entsprechenden Splinten (56 und 55) erfolgt.

8. Kupplung nach Anspruch 6, dadurch gekennzeichnet, daß das Drehelement (36) jeder Zugstange durch einen Teil (92) ersetzt ist, der (in 37) am verbleibenden Element der Zugstangen (22′) drehbar befestigt ist, das eine senkrechte Gabel (93A) zur Verbindung mit dem Ende (21) der Schubstange (20) und vorzugsweise eine waagrechte Gabel (93B) aufweist, wobei an diesem Teil ein Ballastelement (95) befestigt sein kann.

9. Kupplung nach Anspruch 1, dadurch gekennzeichnet, daß die Zugstangen (22 bzw. 22′ und 36) abmontiert sind und an den Befestigungsachsen (23) am Stützarm (29′) Teile (97) montiert sind, die mit einem Werkzeug (96) kraftschlüssig verbunden sind, dessen oberer Teil eine Gabel (93′) zur Befestigung des Endes (21) der Schubstange (20) trägt.

## Claims

1. A "three-point" coupling suitable for use both at the front and at the rear of an engine or of any other vehicle, for example, a tractor, comprising two traction bars capable of pivoting in vertical planes by the action of two jacks (59A and 59B) connected to a common liquid source and mutually connected (at 71 and 72 or 71′ and 72′) so as to function simultaneously and the cylinders of which are mounted pivotably (at 60) with reference to the vehicle; a yoke (18) to which there can be detachably pivoted one end of a thrust bar (20) located in a vertical plane midway between the two bars and in which a power take-off (24) is also located; and screw devices (38 or 38′ and 48) the length of which is adjustable and one end of which is fixed in proximity of the free end (31) of each of the aforesaid traction bars; and characterised in that: a) it has a rigid cross-bar (29 or 29′) constituted by a preferably tubular horizontal distance member (29b or 29′b) the ends of which are fixed rigidly to two vertical brackets (29a or 29′a) pierced with aligned holes (30) to receive each a pivot axle associated with a device (25 to 27) for attaching the crossbar to the vehicle; b) to each of the aforesaid vertical brackets there are attached so as to pivot about horizontal axes the rod (62A or 62B) of one of the aforesaid jacks (59A or 59B), the second end of one of the aforesaid traction bars (22 or 22′ and 36), and the other end of each of the aforesaid screw devices (38 ou 38′ and 48); c) the device attaching the crossbar to the vehicle is constituted by a rigid vertical rectangular frame (25) the horizontal major sides (25a) of which are joined in the centre of their length by the aforesaid yoke (18) and the vertical minor sides (25b) of which are prolonged downwards (at 27) and are pierced with holes (28) aligned horizontally with those (30) of the vertical brackets (29 or 29′a) of the rigid crossbar (29 or 29′); d) the two jacks (59A and 59B) are connected to the aforesaid common liquid source by means of an auxiliary valve (65) with manual control (66), said common liquid source comprising a tank and a pump the functioning of which, caused by the aforesaid valve, can be stopped in known manner by a safety device which acts in case of overpressure; and e) at least one shutter bock (73) associated with one (59A) of the jacks and equipped with a push rod (80) capable of coming into contact with an associated stop (79) when the stroke of the rod (62A) of the aforesaid jack reaches the position which corresponds to the desired inclination for the traction bars includes a right boring (81) connected on the one hand (in 83) to the auxiliary valve (65) and on the other hand to the corresponding end of each of the two jacks (59A, 59B), a slide (85) movable between a rest position which allows for the flowing of the liquid through the aforesaid boring and a position of end of travel wherein the boring is stopped up and the liquid flowing from the auxiliary valve (65) is allowed to strike, through a deviation, a beveled end (85b) of the slide and to push back slide in order to allow for the liquid to directly come through the aforesaid boring to the said corresponding end of both the jacks, and thus to induce a rising of the traction bar (22 or 22' and 36).

2. A coupling according to claim 1, characterized in that each screw device (38 or 38') which transmits the movement of the rods (62A or 62B) of the jacks (59A or 59B) to the traction bars (22 or 22' and 36) carries, at its end which is connected to the cross-bar (29 or 29'), an element (39 or 39') which may be mounted pivotably selectively either fixedly about a predetermined axis, or so as to be capable of moving longitudinally.

3. A coupling according to claim 2, characterized in that the above mentioned element (39) is of parallelepipedic shape, is screwed at one end to a screw (38a) of the aforesaid screw device (38), may be introduced into a yoke constituted by the associated vertical bracket (29a) of the cross-bar (29) and by a plate (41) welded to said bracket, and is provided on the one hand with a longitudinal port (46) and on the other hand with two holes (47) perpendicular to said longitudinal port and located in proximity of its free end, in such a manner that, according to the position of said element, a pivot axle (44) can be introduced into the holes (42, 43) made into the aforesaid yoke and selectively either into the aforesaid holes (47) of the element or into the aforesaid port (46).

4. A coupling according to claim 2, characterized in that the element (39') is constituted by a yoke capable of nesting on the associated bracket (29'a) of the cross-bar (29') into the base of which element the associated screw (38'a) is screwed, and each arm of which yoke is pierced with a port (46') and with an adjacent hole (47') near the free end, so that the axle of attachment to said bracket (29'a) of the cross-bar (29') can be introduced selectively at will into the aligned holes (47') or into the ports (46') of the yoke (39') and thus said axle of attachment is able either to retain said yoke into a given position, or to allow for some sliding motion with reference to the brackets.

5. A coupling according to claim 2, wherein the traction bars (22) are of one piece, and characterized in that the end (39) of each screw device (38) is pivoted to the associated bracket (29a) of the rigid cross-bar (29).

6. A coupling according to claim 2, wherein each traction bar if formed of two elements (22' and 36) mutually articulated, and wherein are provided a first screw device (38') and a second screw device (48), and characterized in that: a) one of the elements (36) can pivot horizontally about a vertical axis; b) an end (39') of each or the first screw devices (38') is pivoted to the associated bracket (29'a) of the cross-bar (29'); and c) a corresponding end of each of the second screw devices (48) is pivoted (at 48a) to the distance member (29'b) of the cross-bar (29').

7. A coupling according to claim 6, characterized in that the common attachment (40') of the first and second screw devices (38' and 48) to the pivoting element (36) of each traction bar comprises a yoke (36a) welled to said pivoting element (36) and an element (51) including an axle (51a) capable of being introduced into holes (49, 50) of said yoke (36a) and of the pivoting element (36) and into a swivel (39'a) integral with the first screw device (38'), and an end (51b) capable of being introduced into and of pivoting in a yoke (48b) integral with the said second screw device (48), the attachment of the axles (51a and 54) being obtained by means of respective pins (56, 55).

8. A coupling according to claim 6, characterized in that one substitutes the pivoting element (36) of each traction bar for an element (92) pivotally connected (at 37) to the remaining element of the traction bars (22'), which is provided with a vertical yoke (93A) for its connection to the end (21) of the thrust bar (20), and preferably a horizontal yoke (93B) is also provided, together with a ballast element (95) adapted to be attached to said horizontal yoke.

9. A coupling according to claim 1, characterized in that the traction bars (22 or 22' and 36) are disassembled, and that on the axles (23) of attachment to the cross-bar (29') are fitted elements (97) integral an implement (96) the top part of which carries a york (93') for the attachment of the end (21) of the thrust bar (20).

# 0015795

## Fig.1

Fig 2

# Fig.3

Fig.4

0015795

# Fig.5

29'2

43'

45

46'

39'

44'

47'

38'

38'2

# Fig.6

Fig. 7

0015795

0 0 15 795

Fig.8

8

Fig.9A

## Fig. 9 B

Fig 10

Fig 11